# EUROPEAN PATENT SPECIFICATION

(11) **EP 3 305 854 B1**
(45) Date of publication and mention of the grant of the patent: **08.04.2026**
(21) Application number: 16799788.1
(22) Date of filing: 10.05.2016
(51) Int. Cl.: C08L 75/04, C08G 18/65, C08K 3/20, C08G 18/75, C08G 18/12, C08G 18/32, C08G 18/42, C08G 18/48

(54) **AQUEOUS URETHANE RESIN COMPOSITION AND ARTICLES**
WÄSSRIGE URETHANHARZZUSAMMENSETZUNG UND ARTIKEL
COMPOSITION ET ARTICLES À BASE DE RÉSINE D'URÉTHANE AQUEUSE

(30) Priority: 25.05.2015 JP 2015105455
(43) Date of publication of application: 11.04.2018
(73) Proprietor: DIC Corporation, Tokyo 174-8520 (JP)
(72) Inventor: MATSUOKA Ryuichi, Sakura-shi Chiba 285-8668 (JP); KANNARI Hiroyoshi, Takaishi-shi Osaka 592-0001 (JP); NAGAHAMA Sadamu, Takaishi-shi Osaka 592-0001 (JP)
(74) Representative: TBK
(86) International application number: PCT/JP2016/063839
(87) International publication number: WO 2016/190080

(56) References cited:
- JP-A- 2001 048 733
- JP-A- 2006 307 216
- JP-A- 2012 057 025
- JP-A- 2012 057 025
- JP-A- 2016 074 751
- JP-A- S62 205 168
- NOVO L�SIAS P. ET AL: "Hansen Solubility Parameters: A Tool for Solvent Selection for Organosolv Delignification", INDUSTRIAL & ENGINEERING CHEMISTRY RESEARCH, vol. 58, no. 31, 1 July 2019 (2019-07-01), pages 14520 - 14527, XP93080212, ISSN: 0888-5885, DOI: 10.1021/acs.iecr.9b00875

## Description

### Technical Field

The present invention relates to an aqueous urethane resin composition usable for various applications, such as coating agents including a steel sheet surface treatment agent, and adhesives.

### Background Art

In recent years, with a growing demand for metals, a demand for a coating agent for surface protection of metal substrates including steel sheets is increasing. Such a coating agent is required to have not only solvent resistance but also corrosion resistance at such a level that peeling and blister of the coating film due to corrosion of the metal substrate can be prevented, and chemical resistance at a high level. In the iron and steel industry where surface washing is frequently performed for a coating film formed on a surface of a metal substrate with an alkaline detergent or the like, chemical resistance is particularly an important property for preventing peeling and dissolving of the coating film, degradation of the metal substrate, or the like, which may be caused due to the influence of the detergent.

For forming a coating film excellent in the chemical resistance, it is important to enhance film formability. As a method for enhancing the film formability to form a uniform coating film free from coating film defects, there is known, for example, a method in which a coating material is applied on a substrate surface, and in subsequent drying, the coating film is dried at a high temperature of approximately 200 to 250°C.

However, in the iron and steel industry in recent years, from the viewpoint of enhancing production efficiency of the metal material, there has been a tendency that the drying temperature is set to a low temperature of approximately 80°C and the time period for drying is set to be very short in the process of applying a coating agent on a metal substrate surface and drying the coating agent to form a coating film. With such a temperature, sufficient film formability cannot be imparted to the coating agent in terms of practical use, thereby providing a problem in that coating film defects and the like are likely to be caused.

On the other hand, as an aqueous urethane resin used in the coating agent as described above, a urethane resin having urethane bonds and urea bonds in a large amount is used in many cases from the viewpoint of imparting a high hardness to the coating film formed. Such a resin has a problem in that the film formability cannot be imparted sufficiently only by the high-temperature drying step, and therefore a film-forming assistant or the like has to be used in combination with the resin.

As the film-forming assistant, in general, N-methyl-2-pyrrolidone is known, and has been widely used since it can impart excellent film formability to a synthetic resin.

However, toxicity of N-methyl-2-pyrrolidone has been revealed, and therefore development of an organic solvent being free from toxicity and having film forming ability comparable to N-methyl-2-pyrrolidone is demanded from industry.

As an organic solvent capable of substituting N-methyl-2-pyrrolidone, uses of, for example, diacetone alcohol, ethylene glycol monobutyl ether, and the like have been studied (see, e.g., PTLs 1 and 2).

Although the above organic solvents have less toxicity as compared with N-methyl-2-pyrrolidone or have no toxicity, they have a problem of being significantly inferior in terms of film forming ability. In particular, it is difficult for these organic solvents to impart film formability to a urethane resin which can form a coating film of a high hardness, and therefore they have a problem of causing coating film defects when used for the coating agent and the like.

JP 2012 057025A describes a coating composition, wherein the viscosity is ≤30 mPa s; the surface tension is 21 to 34 mN/m; the d50 of a pigment dispersion is 30 to 300 nm; a PC group-containing polyurethane resin is contained; a urethanic dispersion or emulsion of d50 of 30 to 130 nm as a resin component is contained; the solid content of the resin component is 1 to 20 mass% in the coating composition; the organic solvent ratio is 5 to 40 mass% in the coating composition; and the organic solvent contains one or more compounds represented by formula (1), one or more heterocyclic compounds, or both compounds. RO-(CH-CH(R)-O)-H (1) wherein R is a 1-6C alkyl group, a phenyl group, or a benzyl group; R is H or CH; and n is an integer of 1 to 3.

### Citation List

### Patent Literature

[PTL 1] JP-A-2006-306943
[PTL 2] JP-T-2011-512445

### Summary of Invention

### Technical Problem

The problem that the invention is to solve is to provide an aqueous urethane resin composition that is excellent in film formability, corrosion resistance, chemical resistance, and substrate adhesiveness, and is capable of forming a low-toxic coating film.

### Solution to Problem

As a result of intensive study for solving the above problems, the present inventors have found that when an aqueous urethane resin composition containing an organic solvent having a specific Hansen solubility parameter is used, excellent film forming ability can be imparted to a resulting coating film, and as a result, a coating film excellent in corrosion resistance, chemical resistance, and substrate adhesiveness can be formed, thus completing the present invention.

Specifically, the present invention relates to an aqueous urethane resin composition as defined in claim 1.

### Advantageous Effects of Invention

The aqueous urethane resin composition of the present invention has very excellent film forming ability and low toxicity, and therefore can be used as a surface protective coating agent for a plastic substrate, a surface protective coating agent for a metal substrate such as a steel sheet, an adhesive, and the like. Because of applicability to plastic substrates, such as an acrylonitrile-butadiene-styrene resin (ABS resin), a polycarbonate resin (PC resin), an ABS/PC resin, a polystyrene resin (PS resin), and a polymethacrylic acid resin (PMMA resin), the aqueous urethane resin composition of the present invention can be suitably used for a coating agent for various articles, such as mobile phones, home electric appliances, office automation devices, and interior materials for automobiles.

In addition, because of the capability of forming a coating film that is so excellent in corrosion resistance that occurrence of rust and the like can be prevented in metal substrates, such as a plated steel sheet including a galvanized steel sheet and an aluminum-zinc alloy steel sheet, an aluminum sheet, an aluminum alloy sheet, an electrical steel sheet, a copper sheet, and a stainless steel sheet, the aqueous urethane resin of the present invention can be suitably used for surface coatings and the like of various articles, such as building components including an exterior wall and a roof, construction components including a guard rail, a sound-proof wall, and a draining trench, home electrical appliances, industrial machines, and exterior materials for automobiles.

### Description of Embodiments

The aqueous urethane resin composition of the present invention is an aqueous urethane resin composition as defined in claim 1.

The urethane resin (A) preferably has aromatic rings and cyclohexyl rings in the range of 1 to 6 mol/kg in total, more preferably in the range of 1.5 to 5 mol/kg, since a coating film excellent in chemical resistance can be formed.

In addition, examples of the urethane resin (A) include one obtained by allowing a polyol (a1) to react with a polyisocyanate (a2) and, as needed, a chain extender with no solvent or in the presence of an organic solvent.

As the polyol (a1) for use in production of the urethane resin (A), (a1-1) one or more of polyols selected from a polyether polyol, a polyester polyol, a polycarbonate polyol, and a polyolefin polyol, (a1-2) a polyol having a hydrophilic group, and (a1-3) a low-molecular polyol having an aromatic ring and/or an aliphatic ring and having a number average molecular weight of 100 to 800 can be used in combination.

Examples of the polyether polyol usable in the polyol (a1-1) include one obtained by addition polymerization of alkylene oxide using as an initiator one or two or more compounds having two or more active hydrogen atoms, such as ethylene glycol and diethylene glycol.

Examples of the initiator include ethylene glycol, diethylene glycol, triethylene glycol, trimethylene glycol, 1,2-propanediol, 1,3-propanediol, 1,3-butanediol, 1,4-butanediol, 1,6-hexanediol, neopentyl glycol, glycerol, trimethylolethane, trimethylolpropane, sorbitol, sucrose, aconite sugar, trimellitic acid, hemimellitic acid, phosphoric acid, ethylenediamine, diethylenetriamine, triisopropanolamine, pyrogallol, dihydroxybenzoic acid, hydroxyphthalic acid, and 1,2,3-propanetritiol.

Examples of the alkylene oxide include ethylene oxide, propylene oxide, butylene oxide, styrene oxide, epichlorohydrin, and tetrahydrofuran.

As a specific example of the polyether polyol, polyoxytetramethyleneglycol formed by ring-opening of tetrahydrofuran is preferably used.

As the polyether polyol, one having a number average molecular weight of 500 to 3,000 is preferably used since substrate adhesiveness can be further enhanced.

Examples of the polyester polyol include one obtained by esterification reaction of a low-molecular polyol and a polycarboxylic acid, a polyester obtained by ring-opening polymerization reaction of a circular ester compound such as ε-caprolactone, and a copolymerized polyester thereof.

Examples of the low-molecular polyol include an aliphatic polyol having a molecular weight of approximately 50 to 300, such as ethylene glycol, propylene glycol, 1,4-butanediol, 1,6-hexanediol, diethylene glycol, neopentyl glycol, and 1,3-butanediol, an aliphatic ring structure-containing polyol, such as cyclohexanedimethanol, an aromatic structure-containing polyol, such as a bisphenol compound including bisphenol A and bisphenol F, and alkylene oxide adduct thereof.

In addition, examples of the polycarboxylic acid usable for production of the polyester polyol include an aliphatic polycarboxylic acid, such as succinic acid, adipic acid, sebacic acid, and dodecanedicarboxylic acid, an aromatic polycarboxylic acid, such as terephthalic acid, isophthalic acid, phthalic acid, and naphthalenedicarboxylic acid, and an anhydride or ester-formable derivative thereof.

As the polyester polyol, one having a number average molecular weight of 500 to 3,000 is preferably used since substrate adhesiveness can be further enhanced.

Examples of the polycarbonate polyol include one obtained by allowing a carbonate ester to react with a polyol and one obtained by allowing phosgene to react with bisphenol A and the like.

Examples of the carbonate ester include methyl carbonate, dimethyl carbonate, ethyl carbonate, diethyl carbonate, cyclocarbonate, and diphenyl carbonate.

Examples of the polyol that can react with the carbonate ester include a relatively-low-molecular diol having a molecular weight of 50 to 2,000, such as ethylene glycol, diethylene glycol, 1,2-propylene glycol, dipropylene glycol, 1,4-butanediol, 1,5-pentanediol, 3-methyl-1,5-pentanediol, 1,4-cyclohexanediol, 1,6-hexanediol, and cyclohexanedimethanol, polyethylene glycol, polypropylene glycol, and a polyester polyol, such as polyhexamethylene adipate.

As the polycarbonate polyol, one having a number average molecular weight of 500 to 3,000 is preferably used since substrate adhesiveness can be further enhanced.

Examples of the polyolefin polyol include polyethylene polyol, polypropylene polyol, polyisobutene polyol, hydrogen-added (hydrogenated) polybutadiene polyol, and hydrogen-added (hydrogenated) polyisoprene polyol.

In addition, as the polyol (a1), from the viewpoint of imparting good water dispersion stability to the urethane resin (A), besides those mentioned above, polyols (a1-2) having a hydrophilic group can be used in combination.

As the polyol (a1-2) having a hydrophilic group, for example, a polyol having an anionic group, a polyol having a cationic group, and a polyol having a nonionic group other than the above-mentioned polyol (a1-1) can be used. Among them, a polyol having an anionic group or a polyol having a cationic group is preferably used, and a polyol having an anionic group is more preferably used.

Examples of the polyol having an anionic group include a polyol having a carboxyl group and a polyol having a sulfonate group.

Examples of the polyol having a carboxyl group include 2,2-dimethylolpropionic acid, 2,2-dimethylolbutanoic acid, 2,2-dimethylolbutyric acid, and 2,2-dimethylolvaleric acid. Among them, 2,2-dimethylolpropionic acid is preferred. A polyester polyol having a carboxyl group obtained by allowing the polyol having a carboxyl group to react with a polycarboxylic acid of various kinds may also be used.

Examples of the polyol having a sulfonate group include a polyester polyol obtained by allowing a dicarboxylic acid, such as 5-sulfoisophthalic acid, sulfoterephthalic acid, 4-sulfophthalic acid, and 5[4-sulfophenoxy]isophthalic acid, or a salt thereof to react with a low molecular weight polyol exemplified above as usable for production of the polyester polyol having an aromatic structure.

The polyol having a carboxyl group and the polyol having a sulfonate group are preferably used in the range where the acid value of the urethane resin (A) becomes 5 to 70, and more preferably 10 to 50. Incidentally, the acid value is, as used herein, a theoretical value which is calculated based on the use amount of the acid group-containing compound, such as a polyol having a carboxyl group, used for production of the urethane resin (A).

The anionic group is preferably neutralized partially or entirely with a basic compound and the like in terms of developing good water dispersibility.

Examples of the basic compound usable in neutralization of the anionic group include ammonia, triethylamine, morpholine, monoethanolamine, and an organic amine having a boiling point of 200°C or higher, such as diethanolamine, and a metal hydroxide, including sodium hydroxide, potassium hydroxide, lithium hydroxide or the like. The basic compound is preferably used in the range where the basic group in the basic compound/the anionic group becomes 0.5 to 3.0 (molar ratio), and more preferably 0.8 to 2.0 (molar ratio), from the viewpoint of enhancing water dispersion stability of the urethane resin composition.

In addition, examples of the polyol having a cationic group include a polyol having a tertiary amino group. Specific examples include N-methyl-diethanolamine and a polyol obtained by allowing a compound having two epoxy groups in one molecule to react with a secondary amine.

The cationic group is preferably neutralized partially or entirely with an acidic compound, such as formic acid, acetic acid, propionic acid, succinic acid, glutaric acid, tartaric acid, and adipic acid.

The tertiary amino group as the cationic group is preferably quarternized partially or entirely. Examples of the quarternization agent include dimethyl sulfate, diethyl sulfate, methyl chloride, and ethyl chloride. Among them, dimethyl sulfate is preferably used.

In addition, examples of the polyol having a nonionic group include a polyol having a polyoxyethylene structure.

The polyol (a1-2) having a hydrophilic group is preferably used in the range of 0.3 to 10 % by mass in the total amount of the polyol (a1) used in production of the urethane resin (A).

In addition, as the polyol (a1), besides the polyol (a1-1) and the polyol (a1-2), the low-molecular polyol (a1-3) having an aromatic ring and/or aliphatic ring and having a number average molecular weight of 100 to 800 may be used.

Examples of a polyol having an aromatic ring usable as the polyol (a1-3) include bisphenol A, bisphenol F, bisphenol AD, and an ethylene oxide or propylene oxide adduct thereof.

Examples of a polyol having an aliphatic ring usable as the polyol (a1-3) include 1,4-cyclohexanedimethanol, 1,3-cyclohexanedimethanol, 1,4-cyclohexanediol, 1,3-cyclohexanediol, 2,2-bis(4-hydroxycyclohexyl)propane, and 4,4-bicyclohexanol.

As the polyol (a1), besides the above-mentioned polyols, other polyols can be used as needed.

Examples of the other polyols include ethylene glycol, diethylene glycol, 1,2-propylene glycol, dipropylene glycol, neopentyl glycol, 1,4-butanediol, 1,5-pentanediol, and 3-methyl-1,5-pentanediol.

Examples of the polyisocyanate (a2) which can react with the polyol (a1) include an aliphatic polyisocyanate, a polyisocyanate having an alicyclic structure, and an aromatic polyisocyanate. The polyisocyanates may be used alone or in combination of two or more thereof.

Examples of the aliphatic polyisocyanate include hexamethylene diisocyanate, lysine diisocyanate methyl ester, xylylene diisocyanate, and tetramethylxylylene diisocyanate. The aliphatic polyisocyanates may be used alone or in combination of two or more thereof.

Examples of the polyisocyanate having an alicyclic structure include isophorone diisocyanate, bis(isocyanatomethyl)cyclohexane, dicyclohexylmethane diisocyanate, cyclohexane diisocyanate, methylcyclohexane diisocyanate, dicyclohexyldimethylmethane diisocyanate, 2,2'-dimethyldicyclohexylmethane diisocyanate, bis(4-isocyanato-n-butylidene)pentaerythritol, dimer acid diisocyanate, 2-isocyanatomethyl-3-(3-isocyanatopropyl)-5-isocyanatometh yl-bicyclo[2.2.1]-heptane, 2-isocyanatomethyl-3-(3-isocyanatopropyl)-6-isocyanatometh yl-bicyclo[2.2.1]-heptane, 2-isocyanatomethyl-2-(3-isocyanatopropyl)-5-isocyanatometh yl-bicyclo[2.2.1]-heptane, 2-isocyanatomethyl-2-(3-isocyanatopropyl)-6-isocyanatometh yl-bicyclo[2.2.1]-heptane, 2-isocyanatomethyl-3-(3-isocyanatopropyl)-6-(2-isocyanatoe thyl)-bicyclo[2.2.1]-heptane, 2-isocyanatomethyl-3-(3-isocyanatopropyl)-6-(2-isocyanatoe thyl)-bicyclo[2.1.1]-heptane, 2-isocyanatomethyl-2-(3-isocyanatopropyl)-5-(2-isocyanatoe thyl)-bicyclo[2.2.1]-heptane, 2-isocyanatomethyl-2-(3-isocyanatopropyl)-6-(2-isocyanatoe thyl)-bicyclo[2.2.1]-heptane, and norbornene diisocyanate. The polyisocyanates having an alicyclic structure may be used alone or in combination of two or more thereof.

Examples of the aromatic polyisocyanate include phenylene diisocyanate, tolylene diisocyanate, diphenylmethane diisocyanate, and naphthalene diisocyanate. The aromatic polyisocyanates may be used alone or in combination of two or more thereof.

Among the polyisocyanates, an aromatic polyisocyanate or a polyisocyanate having an alicyclic structure are preferred since physical properties of a coating film of the aqueous urethane resin composition used in the present invention can be enhanced further. A polyisocyanate having an alicyclic structure is more preferred since the water resistance, chemical resistance, and corrosion resistance of a coating film formed by the aqueous urethane resin composition used in the present invention can be further enhanced.

The reaction of the polyol (a1) and the polyisocyanate (a2) is preferably performed, for example, at an equivalent ratio of the isocyanate groups in the polyisocyanate (a2) relative to the hydroxyl groups in the polyol (a1) in the range of 1.05 to 3, and more preferably in the range of 1.05 to 2.

The reaction of the polyol (a1) and the polyisocyanate (a2) can be typically performed in a temperature range of 50 to 150°C.

When the urethane resin (A) is produced, for the purpose of enhancing various physical properties, such as mechanical characteristics and thermal characteristics, specifically, increasing the hardness of the coating film and imparting toughness thereto, a chain extender may be used as needed.

Examples of the chain extender include a diamine compound, such as ethylenediamine, 1,3-propanediamine, 1,3-butanediamine, 1,4-butanediamine, 1,6-hexamathylenediamine, 1,4-cyclohexanediamine, 3-aminomethyl-3,5,5-trimethylcyclohexylamine (isophoronediamine), 4,4'-dicyclohexylmethanediamine, 2,5-bis(aminomethyl)bicyclo[2.2.1]heptane, 2,6-bis(aminomethyl)bicyclo[2.2.1]heptane, 1,3-bis(aminomethyl)cyclohexane, hydrazine, o-tolylenediamine, m-tolylenediamine, and p-tolylenediamine; a triamine compound, such as diethylenetriamine; and a polyamine compound having 4 or more amino groups, such as triethylenetetramine and tetraethylenepentamine. The chain extender may be used alone or in combination of two or more thereof.

The organic solvent (B) used in the present invention is defined in claim 1.

As a result, excellent film formability can be imparted to the aqueous urethane resin composition of the present invention, and in addition, the organic solvent hardly remains in a coating film formed using the aqueous urethane resin composition of the present invention, and therefore a coating film excellent in solvent resistance and chemical resistance can be formed.

On the other hand, when the dispersion member (δd) is less than 15.5 MPa^{0.5} or 20 MPa^{0.5} or more, the compatibility with the urethane resin (A) is poor and the particle fusion is insufficient, resulting in insufficient film formability.

When the polar member (δp) is less than 4.5 MPa^{0.5} or 12 MPa^{0.5} or more, the particle stability of the urethane resin (A) is deteriorated, resulting in poor composition stability.

When a hydrogen-bonding member (δh) is less than 3 MPa^{0.5} or 10.5 MPa^{0.5} or more, the organic solvent is likely to remain in a coating film of the urethane resin (A), resulting in poor corrosion resistance.

Here, with respect to the Hansen solubility parameter, the solubility parameter introduced by Hildebrand is divided into three components of a dispersion member δd, a polar member δp, and a hydrogen-bonding member δh to represent the solubility parameter in the three dimensional space. The dispersion member δd shows an effect by dispersion force, the polar member δp shows an effect by bi-polar force, and the hydrogen-bonding member δh shows an effect by hydrogen-bonding force.

Incidentally, the definition and calculation of the Hansen solubility parameter are described in Charles M. Hansen "Hansen Solubility Parameters; A Users Handbook (CRC Press, 2007)". In addition, by using a computer software "Hansen Solubility Parameters in Practice (HSPiP)", even a Hansen solubility parameter of a solvent whose solubility parameter is unknown in documents can be simply estimated from the chemical structure thereof. In the present invention, with HSPiP version 4.1.06, for a solvent registered in the database, the registered value was used, and for a solvent not registered, an estimated value was used, whereby a solvent to be used was selected.

The organic solvent (B) may be used alone or in combination of two or more thereof. Incidentally, when two or more organic solvents (B) are used in combination, the Hansen solubility parameter obtained by averaging those of the plural organic solvents in terms of the volume of each organic solvent used is adjusted into the range of the present invention. Thus, even with respect to an organic solvent whose Hansen solubility parameter falls outside the range defined in the present invention and which shows poor film formability alone, the combined use of two or more thereof including the organic solvent may develop excellent film formability.

The organic solvent (B) is defined in claim 1.

Since excellent film formability can be imparted, isophorone is preferably used.

The content of the organic solvent (B) is preferably in the range of 0.1 to 50% by mass in the aqueous urethane resin composition of the present invention, and from the viewpoint of having high composition stability and imparting excellent film formability, the content is more preferably in the range of 1 to 30% by mass.

In addition, the mass ratio of the organic solvent (B) to the aqueous medium (C) described later, [organic solvent (B)/aqueous medium (C)], is preferably in the range of 0.001 to 5 from the viewpoint of imparting excellent film formability, and more preferably in the range of 0.01 to 3.

As the aqueous medium (C) used in the present invention, water is preferred in terms of safety and load to the environment.

The aqueous medium (C) is contained in the range of 30 to 90% by mass in the total amount of the aqueous urethane resin composition of the present invention since the storage stability is excellent.

The aqueous urethane resin composition of the present invention can be produced, for example, by supplying an aqueous dispersion of the urethane resin (A) obtained by the above-mentioned method and the organic solvent (B) all at once or portionwise and mixing them.

In addition, the aqueous urethane resin composition of the present invention can be produced by using the organic solvent (B) as a reaction solvent of the urethane resin (A).

As an organic solvent usable in production of the urethane resin (A), besides the organic solvents exemplified above as the organic solvent (B), a ketone solvent, such as acetone and methyl ethyl ketone; an ether solvent, such as tetrahydrofuran and dioxane; an acetate ester solvent, such as ethyl acetate and butyl acetate; a nitrile solvent, such as acetonitrile; and an amide solvent, such as dimethylformamide are exemplified. The organic solvents may be used alone or in combination of two or more thereof.

The aqueous urethane resin composition of the present invention obtained by the above-mentioned method may contain, besides the above-mentioned components, other additives, as needed.

In addition, for the aqueous urethane resin composition of the present invention, as needed, various additives, such as a crosslinking agent, a plasticizer, an anti-static agent, a wax, a surfactant, an optical stabilizer, a fluidity modifier, a dye, a leveling agent, a rheology controlling agent, a UV absorber, an antioxidant, an optical photocatalytic compound, an inorganic pigment, an organic pigment, and an extender pigment may be used.

When a crosslinking agent is used, resistance to moist heat and rubfastness of a coating film of the aqueous urethane resin composition of the present invention can be further enhanced. As the crosslinking agent, for example, one or more selected from the group consisting of an amino resin, an aziridine compound, a melamine compound, an epoxy compound, an oxazoline compound, a carbodiimide compound, and an isocyanate compound can be used.

In addition, by using the surfactant, the dispersion stability of the aqueous urethane resin composition of the present invention can be further enhanced. When a surfactant is used, the surfactant is used preferably in the range of 20 parts by mass or less relative to 100 parts by mass of the urethane resin (A) since the substrate adhesiveness and water resistance of a resulting coating film can be maintained. It is preferred that no surfactant is used if possible.

In the aqueous urethane resin composition of the present invention, a curing agent or a curing catalyst may be used in combination, as needed, to the extent that the effect of the present invention is not impaired.

As the curing agent, for example, a compound having a silanol group and/or a hydrolyzable silyl group, a polyepoxy compound, a polyoxazoline compound, a polyisocyanate, and the like may be used.

As the curing agent, a compound having a silanol group and/or a hydrolyzable silyl group is particularly preferably used in terms of forming a cross-linked coating film excellent in solvent resistance. In particular, when the aqueous urethane resin composition of the present invention is used for a coating agent for a metal substrate, the hydrolyzable silyl group or the silanol group in the compound enhances the adhesiveness with the substrate metal, and as a result, a coating film excellent in the corrosion resistance can be formed.

As the hydrolyzable silyl group, for example, an alkoxysilyl group is preferably used since the cross linking ability is high and the solvent resistance is enhanced. As the alkoxysilyl group, a trimethoxysilyl group and a triethoxysilyl group are particularly preferred since the cross linking ability is excellent and the solvent resistance is enhanced.

As the compound having a silanol group and/or a hydrolyzable silyl group, for example, a epoxysilane compound, such as γ-glycidoxypropyltrimethoxysilane, γ-glycidoxypropyltriethoxysilane, γ-glycidoxypropylmethyldimethoxysilane, γ-glycidoxypropylmethyldiethoxysilane, 2-(3,4-epoxycyclohexyl)ethyltrimethoxysilane, and 2-(3,4-epoxycyclohexyl)ethyltriethoxysilane, and an aminosilane, such as γ-aminopropyltrimethoxysilane, γ-aminopropyltriethoxysilane, γ-aminopropylmethyldimethoxysilane, and γ-aminopropylmethyldiethoxysilane can be used.

Among them, one or more selected from the group consisting of γ-glycidoxypropyltrimethoxysilane, γ-glycidoxypropyltriethoxysilane, and 2-(3,4-epoxycyclohexyl)ethyltrimethoxysilane are preferably used since the cross linking density of the coating film is enhanced, resulting in good chemical resistance and good solvent resistance.

The compound having a silanol group and/or a hydrolyzable silyl group is preferably used in the range of 0.01% by mass to 10% by mass relative to the total amount of the urethane resin (A) in terms of obtaining the aqueous urethane resin composition of the present invention that can form a coating film excellent in solvent resistance and is excellent in storage stability.

In addition, as a curing catalyst usable for the aqueous urethane resin composition of the present invention, for example, lithium hydroxide, sodium hydroxide, potassium hydroxide, sodium methylate, tetraisopropyl titanate, tetra-n-butyl titanate, tin octanoate, lead octanoate, cobalt octanoate, zinc octanoate, calcium octanoate, zinc naphthenate, cobalt naphthenate, di-n-butyltin diacetate, di-n-butyltin dioctoate, di-n-butyltin dilaurate, di-n-butyltin maleate, p-toluenesulfonic acid, trichloroacetic acid, phosphoric acid, monoalkylphosphoric acid, dialkylphosphoric acid, monoalkylphosphorous acid, dialkylphosphorous acid, etc. may be used.

The aqueous urethane resin composition of the present invention may contain an emulsifier, a dispersion stabilizer, and a leveling agent as needed. However, from the viewpoint of suppressing lowering of the water resistance of a cross-linked coating film, it is preferred that the additive is contained in an amount as small as possible, and the amount is preferably 0.5 % by mass or less relative to the solid amount of the aqueous urethane resin composition.

As described above, the aqueous urethane resin composition of the present invention can be used in a coating agent of various kinds intended to provide surface protection of a substrate of various kinds or to impart a design to a substrate of various kinds.

Examples of the substrate include various plastics and a film thereof, metals, glasses, papers, and woods. In particular, when the coating agent of the present invention is used in a plastic substrate of various kinds, a coating film having an excellent solvent resistance and water resistance can be formed even through a drying step at a relatively low temperature, and peeling of the coating film from the plastic substrate can be prevented.

Typical examples of the plastic substrate include, as a material employed for a plastic molded article, such as a mobile phone, a home electric appliance, an interior material for automobiles, and an office automation device, an acrylonitrile-butadiene-styrene resin (ABS resin), a polycarbonate resin (PC resin), an ABS/PC resin, a polystyrene resin (PS resin), a poly(methyl methacrylate) resin (PMMA resin), an acrylic resin, a polypropylene resin, and a polyethylene resin. As a plastic film substrate, a polyethylene terephthalate film, a polyester film, a polyethylene film, a polypropylene film, a triacetylcellulose (TAC) film, a polycarbonate film, a polyvinyl chloride film, and the like can be used.

The aqueous urethane resin composition of the present invention can form a finely-formed cross-linked coating film which can suppress corrosion of a metal material itself, and therefore can be suitably used in a coating agent for a metal substrate, such as a steel sheet surface treatment agent.

As the metal substrate, for example, a plated steel sheet, such as a galvanized steel sheet and an aluminum-zinc alloy steel sheet, an aluminum sheet, an aluminum alloy sheet, an electrical steel sheet, a copper sheet, a stainless steel sheet, and the like may be used that are used for automobiles, home electronic appliances, building materials, or other applications.

The aqueous urethane resin composition of the present invention can form a coating film excellent in chemical resistance, including resistance to acids, resistance to bases, and the like, even when the thickness of the cross-linked coating film is about 5 µm. In addition, the aqueous urethane resin composition of the present invention can form a coating film excellent in chemical resistance, including resistance to acids, resistance to bases, and the like even when the thickness of the cross-linked coating film is about 1 µm.

The aqueous urethane resin composition of the present invention can form a coating film, by being applied on a substrate, dried, and cured.

Incidentally, in the drying step, the aqueous medium in the aqueous urethane resin composition volatilizes, and subsequently the organic solvent volatilizes. After volatilization of the aqueous medium, the film is composed of the organic solvent and the urethane resin, and the organic solvent dissolves the urethane resin to facilitate the particle fusion, whereby a coating film free from coating film defects can be formed.

Examples of the coating method include a spraying method, a curtain coater method, a flow coater method, a roll coater method, a blush painting method, and a dipping method.

The drying may be natural dry under a normal temperature, or may be dry with heat. The dry with heat is preferably performed generally at 40 to 250°C for a time period of approximately 1 to 600 seconds.

Incidentally, when the substrate is one easily deformed by heat, such as a plastic substrate, the drying temperature of the coating film is preferably regulated to approximately 80°C or lower. Here, a coating film obtained by drying a conventional aqueous urethane resin composition at a low temperature of 80°C or lower does not have sufficient solvent resistance in some cases. In contrast, with the aqueous urethane resin composition of the present invention, even in the case of drying at a low temperature of 80°C or lower for a time period as short as several seconds, since the film formability of the coating film is enhanced by the organic solvent used in the present invention, it is possible to form a coating film exhibiting excellent solvent resistance, water resistance, and chemical resistance.

Example of the article having a coating film of the aqueous urethane resin composition of the present invention include building components, such as an exterior wall and a roof, construction components, such as a guard rail, a sound-proof wall, and a draining trench, mobile phones, home electrical appliances, office automation devices, interior materials for automobiles, and exterior materials for automobiles.

### Examples

Hereinunder, the present invention will be specifically explained with reference to Examples and Comparative Examples.

### (Synthetic Example 1: synthesis of urethane resin (A))

Into a container equipped with a thermometer, a nitrogen gas introduction tube, and a stirrer and purged with nitrogen, 500 parts by mass of a polyester polyol having a number average molecular weight of 2,000 obtained by allowing 1, 4-butanediol to react with adipic acid, 42 parts by mass of 2,2-dimethylolpropionic acid, 63 parts by mass of 1,4-cyclohexanedimethanol, 320 parts by mass of dicyclohexylmethane diisocyanate, and 1,000 parts by mass of methyl ethyl ketone were put, and allowed to reacted at 80°C for 10 hours, whereby an organic solvent solution of an urethane prepolymer having an isocyanate group at an end of the molecule was obtained.

Next, into the organic solvent solution of the urethane prepolymer, 31 parts by mass of triethylamine was added to thereby neutralize carboxyl groups in the urethane prepolymer, 3,000 parts by mass of water was further added thereto, and the resultant was thoroughly stirred, whereby an aqueous dispersion of urethane resin (A) was obtained.

Next, into the aqueous dispersion, 28 parts by mass of a 25 mass% aqueous hydrazine solution was added and the resultant was stirred to thereby extend the chain of the particulate urethane resin, and then the solvent was removed, whereby an aqueous dispersion of the urethane resin (A) having 35% by mass of nonvolatile components was obtained. The urethane resin (A) had a glass transition temperature (Tg) of 60°C, and the total content of aromatic rings and cyclohexyl rings in the urethane resin (A) was 3.1 mol/kg.

### (Synthetic Example 2: synthesis of urethane resin (B))

Into a container equipped with a thermometer, a nitrogen gas introduction tube, and a stirrer and purged with nitrogen, 500 parts by mass of a polyester polyol having a number average molecular weight of 2,000 obtained by allowing 1, 4-butanediol to react with adipic acid, 42 parts by mass of 2,2-dimethylolpropionic acid, 151 parts by mass of two-mole propylene oxide adduct of bisphenol A, 320 parts by mass of dicyclohexylmethane diisocyanate, and 1,000 parts by mass of methyl ethyl ketone were put, and allowed to react at 80°C for 10 hours, whereby an organic solvent solution of an urethane prepolymer having an isocyanate group at an end of the molecule was obtained.

Next, into the organic solvent solution of the urethane prepolymer, 31 parts by mass of triethylamine was added to thereby neutralize carboxyl groups in the urethane prepolymer, 3,000 parts by mass of water was further added thereto, and the resultant was thoroughly stirred, whereby an aqueous dispersion of urethane resin (B) was obtained.

Next, to the aqueous dispersion, 84 parts by mass of a 25 mass% aqueous hydrazine solution was added and the resultant was stirred to thereby extend the chain of the particulate urethane resin, and then the solvent was removed, whereby an aqueous dispersion of the urethane resin (B) having 35% by mass of nonvolatile components was obtained. The urethane resin (B) had a glass transition temperature (Tg) of 60°C, and the total content of aromatic rings and cyclohexyl rings in the urethane resin (B) was 3.2 mol/kg.

### (Synthetic Example 3: synthesis of urethane resin (C))

Into a container equipped with a thermometer, a nitrogen gas introduction tube, and a stirrer and purged with nitrogen, 500 parts by mass of a polyester polyol having a number average molecular weight of 2,000 obtained by allowing 1,4-butanediol to react with adipic acid, 42 parts by mass of 2,2-dimethylolpropionic acid, 46 parts by mass of neopentyl glycol, 320 parts by mass of dicyclohexylmethane diisocyanate, and 1,000 parts by mass of methyl ethyl ketone were put, and allowed to react at 80°C for 10 hour, whereby an organic solvent solution of an urethane prepolymer having an isocyanate group at an end of the molecule was obtained.

Next, 31 parts by mass of triethylamine was added to the organic solvent solution of the urethane prepolymer to thereby neutralize carboxyl groups in the urethane prepolymer, 3,000 parts by mass of water was further added thereto, and the resultant was thoroughly stirred, whereby an aqueous dispersion of urethane resin (C) was obtained. Next, into the aqueous dispersion, 84 parts by mass of a 25 mass% aqueous hydrazine solution was added and the resultant was stirred to thereby extend the chain of the particulate urethane resin, and then the solvent was removed, whereby an aqueous dispersion of the urethane resin (C) having 35% by mass of nonvolatile components was obtained. The urethane resin (C) had a glass transition temperature (Tg) of 52°C, and the total content of aromatic rings and cyclohexyl rings in the urethane resin (C) was 2.6 mol/kg.

### (Synthetic Example 4: synthesis of urethane resin (D))

Into a container equipped with a thermometer, a nitrogen gas introduction tube, and a stirrer and purged with nitrogen, 500 parts by mass of a polyester polyol having a number average molecular weight of 2,000 obtained by allowing 1,4-butanediol to react with adipic acid, 42 parts by mass of 2,2-dimethylolpropionic acid, 63 parts by mass of 1,4-cyclohexanedimethanol, 271 parts by mass of isophorone diisocyanate, and 1,000 parts by mass of methyl ethyl ketone were put, and allowed to react at 80°C for 10 hours, whereby an organic solvent solution of an urethane prepolymer having an isocyanate group at an end of the molecule was obtained.

Next, into the organic solvent solution of the urethane prepolymer, 31 parts by mass of triethylamine was added to thereby neutralize carboxyl groups in the urethane prepolymer, 3,000 parts by mass of water was further added thereto, and the resultant was thoroughly stirred, whereby an aqueous dispersion of urethane resin (D) was obtained.

Next, into the aqueous dispersion, 28 parts by mass of a 25 mass% aqueous hydrazine solution was added and the resultant was stirred to thereby extend the chain of the particulate urethane resin, and then the solvent was removed, whereby an aqueous dispersion of the urethane resin (D) having 35% by mass of nonvolatile components was obtained. The urethane resin (D) had a glass transition temperature (Tg) of 20°C, and the total content of aromatic rings and cyclohexyl rings in the urethane resin (D) was 0.5 mol/kg.

### (Synthetic Example 5: synthesis of urethane resin (E))

Into a container equipped with a thermometer, a nitrogen gas introduction tube, and a stirrer and purged with nitrogen, 500 parts by mass of a polyester polyol having a number average molecular weight of 2,000 obtained by allowing 1,4-butanediol to react with adipic acid, 48 parts by mass of 2,2-dimethylolpropionic acid, 170 parts by mass of 1,4-cyclohexanedimethanol, 484 parts by mass of isophorone diisocyanate, and 1,000 parts by mass of methyl ethyl ketone were put, and allowed to react at 80°C for 10 hours, whereby an organic solvent solution of an urethane prepolymer having an isocyanate group at an end of the molecule was obtained.

Next, into the organic solvent solution of the urethane prepolymer, 36 parts by mass of triethylamine was added to thereby neutralize carboxyl groups in the urethane prepolymer, 3,000 parts by mass of water was further added thereto, and the resultant was thoroughly stirred, whereby an aqueous dispersion of urethane resin (E) was obtained.

Next, into the aqueous dispersion, 50 parts by mass of a 25 mass% aqueous hydrazine solution was added and the resultant was stirred to thereby extend the chain of the particulate urethane resin, and then the solvent was removed, whereby an aqueous dispersion of the urethane resin (E) having 35% by mass of nonvolatile components was obtained. The urethane resin (E) had a glass transition temperature (Tg) of 40°C, and the total content of aromatic rings and cyclohexyl rings in the urethane resin (E) was 1 mol/kg.

### (Synthetic Example 6: synthesis of urethane resin (F))

Into a container equipped with a thermometer, a nitrogen gas introduction tube, and a stirrer and purged with nitrogen, 500 parts by mass of a polyester polyol having a number average molecular weight of 2,000 obtained by allowing 1,4-butanediol to react with adipic acid, 84 parts by mass of 2,2-dimethylolpropionic acid, 475 parts by mass of 1,4-cyclohexanedimethanol, 1130 parts by mass of isophorone diisocyanate, and 2,000 parts by mass of methyl ethyl ketone were put, and allowed to react at 80°C for 10 hours, whereby an organic solvent solution of an urethane prepolymer having an isocyanate group at an end of the molecule was obtained.

Next, into the organic solvent solution of the urethane prepolymer, 63 parts by mass of triethylamine was added to thereby neutralize carboxyl groups in the urethane prepolymer, 7,000 parts by mass of water was added thereto, and the resultant was thoroughly stirred, whereby an aqueous dispersion of urethane resin (F) was obtained.

Next, into the aqueous dispersion, 118 parts by mass of a 25 mass% aqueous hydrazine solution was added and the resultant was stirred to thereby extend the chain of the particulate urethane resin, and then the solvent was removed, whereby an aqueous dispersion of the urethane resin (F) having 35% by mass of nonvolatile components was obtained. The urethane resin (F) had a glass transition temperature (Tg) of 45°C, and the total content of aromatic rings and cyclohexyl rings in the urethane resin (F) was 1.5 mol/kg.

### (Synthetic Example 7: synthesis of urethane resin (G))

Into a container equipped with a thermometer, a nitrogen gas introduction tube, and a stirrer and purged with nitrogen, 500 parts by mass of a polyester polyol having a number average molecular weight of 2,000 obtained by allowing 1,4-butanediol to react with adipic acid, 67 parts by mass of 2,2-dimethylolpropionic acid , 252 parts by mass of 1,4-cyclohexanedimethanol, 800 parts by mass of dicyclohexylmethane diisocyanate, and 1,600 parts by mass of methyl ethyl ketone were put, and allowed to react at 80°C for 10 hours, whereby an organic solvent solution of an urethane prepolymer having an isocyanate group at an end of the molecule was obtained.

Next, into the organic solvent solution of the urethane prepolymer, 51 parts by mass of triethylamine was added to thereby neutralize carboxyl groups in the urethane prepolymer, 5,000 parts by mass of water was further added thereto, and the resultant was thoroughly stirred, whereby an aqueous dispersion of urethane resin (G) was obtained.

Next, into the aqueous dispersion, 71 parts by mass of a 25 mass% aqueous hydrazine solution was added and the resultant was stirred to thereby extend the chain of the particulate urethane resin, and then the solvent was removed, whereby an aqueous dispersion of the urethane resin (G) having 35% by mass of nonvolatile components was obtained. The urethane resin (G) had a glass transition temperature (Tg) of 120°C, and the total content of aromatic rings and cyclohexyl rings in the urethane resin (G) was 4.8 mol/kg.

### (Synthetic Example 8: synthesis of urethane resin (H))

Into a container equipped with a thermometer, a nitrogen gas introduction tube, and a stirrer and purged with nitrogen, 100 parts by mass of a polyester polyol having a number average molecular weight of 2,000 obtained by allowing 1, 4-butanediol to react with adipic acid, 27 parts by mass of 2,2-dimethylolpropionic acid, 144 parts by mass of 1,4-cyclohexanedimethanol, 400 parts by mass of dicyclohexylmethane diisocyanate, and 700 parts by mass of methyl ethyl ketone were put, and allowed to react at 80°C for 10 hours, whereby an organic solvent solution of an urethane prepolymer having an isocyanate group at an end of the molecule was obtained.

Next, into the organic solvent solution of the urethane prepolymer, 20 parts by mass of triethylamine was added to thereby neutralize carboxyl groups in the urethane prepolymer, 2,000 parts by mass of water was further added thereto, and the resultant was thoroughly stirred, whereby an aqueous dispersion of urethane resin (H) was obtained.

Next, into the aqueous dispersion, 35 parts by mass of a 25 mass% aqueous hydrazine solution was added and the resultant was stirred to thereby extend the chain of the particulate urethane resin, and then the solvent was removed, whereby an aqueous dispersion of the urethane resin (H) having 35% by mass of nonvolatile components was obtained. The urethane resin (H) had a glass transition temperature (Tg) of 149°C, and the total content of aromatic rings and cyclohexyl rings in the urethane resin (H) was 6 mol/kg.

### (Synthetic Example 9: synthesis of urethane resin (I))

Into a container equipped with a thermometer, a nitrogen gas introduction tube, and a stirrer and purged with nitrogen, 1 part by mass of a polyester polyol having a number average molecular weight of 2,000 obtained by allowing 1, 4-butanediol to react with adipic acid, 107 parts by mass of 2,2-dimethylolpropionic acid, 606 parts by mass of 1,4-cyclohexanedimethanol, 1,600 parts by mass of dicyclohexylmethane diisocyanate, and 2,000 parts by mass of methyl ethyl ketone were put, and allowed to react at 80°C for 10 hours, whereby an organic solvent solution of an urethane prepolymer having an isocyanate group at an end of the molecule was obtained.

Next, into the organic solvent solution of the urethane prepolymer, 81 parts by mass of triethylamine was added to thereby neutralize carboxyl groups in the urethane prepolymer, 7,000 parts by mass of water was further added thereto, and the resultant was thoroughly stirred, whereby an aqueous dispersion of urethane resin (I) was obtained.

Next, into the aqueous dispersion, 141 parts by mass of a 25 mass% aqueous hydrazine solution was added and the resultant was stirred to thereby extend the chain of the particulate urethane resin, and then the solvent was removed, whereby an aqueous dispersion of the urethane resin (I) having 35% by mass of nonvolatile components was obtained. The urethane resin (I) had a glass transition temperature (Tg) of 158°C, and the total content of aromatic rings and cyclohexyl rings in the urethane resin (I) was 7 mol/kg.

### (Example 1: preparation of aqueous urethane resin composition (1))

To 90 parts by mass of the aqueous dispersion of the urethane resin (A) having 35% by mass of nonvolatile components obtained in Synthetic Example 1, 10 parts by mass of tripropylene glycol methyl ether (hereinunder, abbreviated as "organic solvent (1) ") was added, and the mixture was stirred at 40°C for 5 hours, whereby aqueous urethane resin composition (1) was obtained.

### (Example 2: preparation of aqueous urethane resin composition (2))

To 90 parts by mass of the aqueous dispersion of the urethane resin (A) obtained in Synthetic Example 1, 10 parts by mass of 1,4-butanediol diacetate (hereinunder, abbreviated as "organic solvent (2) ") was added, and the mixture was stirred at 40°C for 5 hours, whereby aqueous urethane resin composition (2) was obtained.

### (Example 3: preparation of aqueous urethane resin composition (3))

To 90 parts by mass of the aqueous dispersion of the urethane resin (A) obtained in Synthetic Example 1, 10 parts by mass of isophorone (hereinunder, abbreviated as "organic solvent (3)") was added, and the mixture was stirred at 40°C for 5 hours, whereby aqueous urethane resin composition (3) was obtained.

### (Example 4: preparation of aqueous urethane resin composition (4); Reference Example)

To 90 parts by mass of the aqueous dispersion of the urethane resin (A) obtained in Synthetic Example 1, 10 parts by mass of diethylene glycol diethyl ether (hereinunder, abbreviated as "organic solvent (4)") was added, and the mixture was stirred at 40°C for 5 hours, whereby aqueous urethane resin composition (4) was obtained.

### (Example 5: preparation of aqueous urethane resin composition (5); Reference Example)

To 90 parts by mass of the aqueous dispersion of the urethane resin (A) obtained in Synthetic Example 1, 10 parts by mass of dipropylene glycol monomethyl ether (hereinunder, abbreviated as "organic solvent (5)") was added, and the mixture was stirred at 40°C for 5 hours, whereby aqueous urethane resin composition (5) was obtained.

### (Example 6: preparation of aqueous urethane resin composition (6); Reference Example)

To 90 parts by mass of the aqueous dispersion of the urethane resin (A) obtained in Synthetic Example 1, 10 parts by mass of dipropylene glycol methyl ether acetate (hereinunder, abbreviated as "organic solvent (6)") was added, and the mixture was stirred at 40°C for 5 hours, whereby aqueous urethane resin composition (6) was obtained.

### (Example 7: preparation of aqueous urethane resin composition (7); Reference Example)

To 90 parts by mass of the aqueous dispersion of the urethane resin (A) obtained in Synthetic Example 1, 10 parts by mass of a solvent obtained by mixing diethylene glycol monobutyl ether and diethylene glycol monobutyl ether acetate in the same volume amount (hereinunder, abbreviated as "organic solvent (7)") was added, and the mixture was stirred at 40°C for 5 hours, whereby aqueous urethane resin composition (7) was obtained.

### (Example 8: preparation of aqueous urethane resin composition (8))

To 45 parts by mass of the aqueous dispersion of the urethane resin (A) obtained in Synthetic Example 1, 55 parts by mass of the organic solvent (3) was added, and the mixture was stirred at 40°C for 5 hours, whereby aqueous urethane resin composition (8) was obtained.

### (Example 9: preparation of aqueous urethane resin composition (9))

To 5 parts by mass of the aqueous dispersion of the urethane resin (A) obtained in Synthetic Example 1, 94.95 parts by mass of ion exchange water and 0.05 parts by mass of the organic solvent (3) were added, and the mixture was stirred at 40°C for 5 hours, whereby aqueous urethane resin composition (9) was obtained.

### (Example 10: preparation of aqueous urethane resin composition (10))

To 90 parts by mass of the aqueous dispersion of the urethane resin (B) obtained in Synthetic Example 2, 10 parts by mass of the organic solvent (3) was added, and the mixture was stirred at 40°C for 5 hours, whereby aqueous urethane resin composition (10) was obtained.

### (Example 11: preparation of aqueous urethane resin composition (11))

To 90 parts by mass of the aqueous dispersion of the urethane resin (C) obtained in Synthetic Example 3, 10 parts by mass of the organic solvent (3) was added, and the mixture was stirred at 40°C for 5 hours, whereby aqueous urethane resin composition (11) was obtained.

### (Example 12: preparation of aqueous urethane resin composition (12))

To 90 parts by mass of the aqueous dispersion of the urethane resin (D) obtained in Synthetic Example 4, 10 parts by mass of the organic solvent (3) was added, and the mixture was stirred at 40°C for 5 hours, whereby aqueous urethane resin composition (12) was obtained.

### (Example 13: preparation of aqueous urethane resin composition (13))

To 90 parts by mass of the aqueous dispersion of the urethane resin (E) obtained in Synthetic Example 5, 10 parts by mass of the organic solvent (3) was added, and the mixture was stirred at 40°C for 5 hours, whereby aqueous urethane resin composition (13) was obtained.

### (Example 14: preparation of aqueous urethane resin composition (14))

To 90 parts by mass of the aqueous dispersion of the urethane resin (F) obtained in Synthetic Example 6, 10 parts by mass of the organic solvent (3) was added, and the mixture was stirred at 40°C for 5 hours, whereby aqueous urethane resin composition (14) was obtained.

### (Example 15: preparation of aqueous urethane resin composition (15))

To 90 parts by mass of the aqueous dispersion of the urethane resin (G) obtained in Synthetic Example 7, 10 parts by mass of the organic solvent (3) was added, and the mixture was stirred at 40°C for 5 hours, whereby aqueous urethane resin composition (15) was obtained.

### (Example 16: preparation of aqueous urethane resin composition (16))

To 90 parts by mass of the aqueous dispersion of the urethane resin (H) obtained in Synthetic Example 8, 10 parts by mass of the organic solvent (3) was added, and the mixture was stirred at 40°C for 5 hours, whereby aqueous urethane resin composition (16) was obtained.

### (Example 17: preparation of aqueous urethane resin composition (17))

To 90 parts by mass of the aqueous dispersion of the urethane resin (I) obtained in Synthetic Example 9, 10 parts by mass of the organic solvent (3) was added, and the mixture was stirred at 40°C for 5 hours, whereby aqueous urethane resin composition (17) was obtained.

### (Comparative Example 1: preparation of aqueous urethane resin composition (C1))

To 90 parts by mass of the aqueous dispersion (A), 10 parts by mass of diethylene glycol monobutyl ether was added, and the mixture was stirred at 40°C for 5 hours, whereby aqueous urethane resin composition (C1) was obtained.

### (Comparative Example 2: preparation of aqueous urethane resin composition (C2))

To 90 parts by mass of the aqueous dispersion (A), 10 parts by mass of diethylene glycol monobutyl ether acetate was added, and the mixture was stirred at 40 for 5 hours, whereby aqueous urethane resin composition (C2) was obtained.

### (Comparative Example 3: preparation of aqueous urethane resin composition (C3))

To 90 parts by mass of the aqueous dispersion (A), 10 parts by mass of ethylene glycol monobutyl ether acetate was added, and the mixture was stirred at 40°C for 5 hours, whereby aqueous urethane resin composition (C3) was obtained.

### (Comparative Example 4: preparation of aqueous urethane resin composition (C4))

To 90 parts by mass of the aqueous dispersion (A), 10 parts by mass of N-methylpyrrolidone was added, and the mixture was stirred at 40°C for 5 hours, whereby aqueous urethane resin composition (C4) was obtained.

The aqueous urethane resin compositions obtained in Examples and Comparative Examples were used to perform the following evaluations.

### [Evaluation method of film formability]

The aqueous urethane resin compositions obtained in Examples 1 to 17 and Comparative Examples 1 to 4 each was applied on a substrate made of polypropylene film using a bar coater so that the dried coating film has a thickness of 50 µm, and dried under an environment of a room temperature of 23°C and a humidity of 65% by a cast method. The film formability after 24-hour drying was evaluated visually according to the following evaluation criteria.
A: No crack occurs.
B: A very small number of fine cracks occur.
C: Apparent cracks occur throughout the coating film surface.
D: The coating film is in a form of broken pieces and a film is not formed.

### [Production of test specimen]

The aqueous urethane resin compositions obtained in Examples 1 to 17 and Comparative Examples 1 to 4 each was applied into a thickness of 1 µm on a 55 mass%-aluminum-zinc-alloy-plated steel sheet that was not surface-treated, and dried at 250°C for 10 seconds, whereby a test specimen was produced.

### [Evaluation method of corrosion resistance of coating film]

A surface of the coating film constituting the test specimen was scratched to a depth reaching the substrate with a utility knife, a salt spray test was performed with a salt spray test instrument manufactured by Suga Test Instruments Co. Ltd. and the area where rust occurred after 240 hours was visually determined to evaluate the corrosion resistance. Measured by a method in accordance with a JIS test method (JIS Z2371: 2000).
A: The area where rust occurred was less than 10% of the entire coating film surface.
B: The area where rust occurred was 10% or more and less than 40% of the entire coating film surface.
C: The area where rust occurred was 40% or more and less than 70% of the entire coating film surface.
D: The area where rust occurred was 70% or more of the entire coating film surface.

### [Evaluation method of chemical resistance (resistance to bases)]

The test specimen was used and immersed in an aqueous sodium hydroxide solution of 1 mass% concentration for 5 hours, and then the state of degradation of the coating film was visually evaluated according to the following criteria.
A: The area where the color was changed to black or brown was less than 10% of the entire coating film surface.
B: The area where the color was changed to black or brown was 10% or more and less than 40% of the entire coating film surface.
C: The area where the color was changed to black or brown was 40% or more and less than 70% of the entire coating film surface.
D: The area where the color was changed to black or brown was 70% or more of the entire coating film surface.

### [Evaluation method of chemical resistance (resistance to acids)]

The test specimen was used and immersed in an aqueous hydrochloric acid solution of 1 mass% concentration for 24 hours, and then the state of degradation of the coating film was visually evaluated according to the following criteria.
A: The area where the color was changed to black or brown was less than 10% of the entire coating film surface.
B: The area where the color was changed to black or brown was 10% or more and less than 40% of the entire coating film surface.
C: The area where the color was changed to black or brown was 40% or more and less than 70% of the entire coating film surface.
D: The area where the color was changed to black or brown was 70% or more of the entire coating film surface.

### [Evaluation method of substrate adhesiveness]

The coating film of the test specimen was cut crosswise and the degree of peeling as a tape was evaluated according to the following criteria.
A: No abnormality is observed on the coating film.
B: A slight degree (5% or less in area) of lifting is observed in the coating film.
C: A small degree (more than 5% and 20% or less in area) of lifting is observed in the coating film.
D: A large degree (more than 20% in area) of lifting is observed in the coating film.

### [Evaluation method of composition stability]

To 100 parts of the aqueous urethane resin composition obtained in Examples 1 to 17 and Comparative Examples 1 to 4, 2 parts of a 10 mass% aqueous zirconium ammonium carbonate solution was added, stored at 40°C for 6 hours, followed by filtering through a 200-mesh filter, and then evaluated according to the following criteria.
A: The amount of the residue (aggregation) is less than 1%.
B: The amount of the residue (aggregation) is 1% or more and less than 5%.
C: The amount of the residue (aggregation) is 5% or more and less than 20%.
D: The amount of the residue (aggregation) is 20% or more.

### [Evaluation method of environmental adaptability]

Regarding the organic solvent contained in the aqueous urethane resin composition, whether or not it is listed in the Candidate List of Substances of Very High Concern in Annex XIV of the Regulation concerning the Registration, Evaluation, Authorization and Restriction of Chemicals (REACH) was checked, and a substance not listed therein was evaluated as "A" and a substance listed therein was as "B".

The compositions of the aqueous urethane resin compositions (1) to (17) obtained in Examples 1 to 17 and the above evaluation results thereof are shown in Table 1.

**[Table 1] * (Reference Example)**

| Table 1 | | | Example 1 | Example 2 | Example 3 | Example 4* | Example 5* | Example 6* | Example 7* | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|---|
| Aqueous urethane resin composition | | | (1) | (2) | (3) | (4) | (5) | (6) | (7) | (8) | (9) | (10) | (11) | (12) | (13) | (14) | (15) | (16) | (17) |
| Composition / parts by mass | Urethane resin (A) aqueous dispersion | | 90 | 90 | 90 | 90 | 90 | 90 | 90 | 45 | 5 | | | | | | | | |
| | Urethane resin (B) aqueous dispersion | | | | | | | | | | | 90 | | | | | | | |
| | Urethane resin (C) aqueous dispersion | | | | | | | | | | | | 90 | | | | | | |
| | Urethane resin (D) aqueous dispersion | | | | | | | | | | | | | 90 | | | | | |
| | Urethane resin (E) aqueous dispersion | | | | | | | | | | | | | | 90 | | | | |
| | Urethane resin (F) aqueous dispersion | | | | | | | | | | | | | | | 90 | | | |
| | Urethane resin (G) aqueous dispersion | | | | | | | | | | | | | | | | 90 | | |
| | Urethane resin (H) aqueous dispersion | | | | | | | | | | | | | | | | | 90 | |
| | Urethane resin (I) aqueous dispersion | | | | | | | | | | | | | | | | | | 90 |
| | Organic solvent (1) | | 10 | | | | | | | | | | | | | | | | |
| | Organic solvent (2) | | | 10 | | | | | | | | | | | | | | | |
| | Organic solvent (3) | | | | 10 | | | | | 55 | 0.05 | 10 | 10 | 10 | 10 | 10 | 10 | 10 | 10 |
| | Organic solvent (4) | | | | | 10 | | | | | | | | | | | | | |
| | Organic solvent (5) | | | | | | 10 | | | | | | | | | | | | |
| | Organic solvent (6) | | | | | | | 10 | | | | | | | | | | | |
| | Organic solvent (7) | | | | | | | | 10 | | | | | | | | | | |
| | Ion exchange water | | | | | | | | | | 94.95 | | | | | | | | |
| Hansen solubility parameter of organic solvent [MPa^{0.5}] | | δd | 16 | 16.4 | 17 | 15.8 | 16.1 | 16.3 | 16 | 17 | 17 | 17 | 17 | 17 | 17 | 17 | 17 | 17 | 17 |
| | | δp | 6.3 | 5.5 | 8 | 5.9 | 6.7 | 4.9 | 5.6 | 8 | 8 | 8 | 8 | 8 | 8 | 8 | 8 | 8 | 8 |
| | | δh | 8.6 | 7.4 | 5 | 5.6 | 10.4 | 8 | 9.4 | 5 | 5 | 5 | 5 | 5 | 5 | 5 | 5 | 5 | 5 |
| Film formability | | | A | A | A | B | A | A | A | A | B | A | A | A | A | A | A | B | B |
| Corrosion resistance | | | A | A | A | A | B | A | A | B | C | A | B | C | B | A | A | B | B |
| Chemical resistance (resistance to bases) | | | A | A | A | B | B | B | A | B | B | A | C | B | B | A | A | A | A |
| Chemical resistance (resistance to acids) | | | A | A | A | A | A | A | A | A | B | A | B | A | A | A | A | A | A |
| Substrate adhesiveness | | | A | A | A | B | A | A | A | A | B | A | A | A | A | A | A | A | C |
| Composition stability | | | A | A | A | A | A | B | A | B | A | A | A | A | A | A | A | A | A |
| Environmental adaptability | | | A | A | A | A | A | A | A | A | A | A | A | A | A | A | A | A | A |

The compositions of the aqueous urethane resin compositions (C1) to (C4) obtained in Comparative Examples 1 to 4 and the above evaluation results thereof are shown in Table 2.

**[Table 2]**

| Table 2 | | | Comparative Example 1 | Comparative Example 2 | Comparative Example 3 | Comparative Example 4 |
|---|---|---|---|---|---|---|
| Aqueous urethane resin composition | | | (C1) | (C2) | (C3) | (C4) |
| Composition / parts by mass | Urethane resin (A) aqueous dispersion | | 90 | 90 | 90 | 90 |
| | Organic solvent (8) | | 10 | | | |
| | Organic solvent (9) | | | 10 | | |
| | Organic solvent (10) | | | | 10 | |
| | Organic solvent (11) | | | | | 10 |
| Hansen solubility parameter of organic solvent [MPa^{0.5}] | | δd | 16 | 16 | 15.3 | 18 |
| | | δp | 7 | 4.1 | 7.5 | 12.3 |
| | | δh | 10.6 | 8.2 | 6.8 | 7.2 |
| Film formability | | | C | C | D | A |
| Corrosion resistance | | | D | D | D | A |
| Chemical resistance (resistance to bases) | | | D | D | D | A |
| Chemical resistance (resistance to acids) | | | D | D | D | A |
| Substrate adhesiveness | | | D | C | D | A |
| Composition stability | | | C | D | C | C |
| Environmental adaptability | | | A | A | A | B |

It was able to be confirmed from the evaluation results of Examples 1 to 17 shown in Table 1 that the aqueous urethane resin compositions of the present invention had high composition stability and excellent film formability, and coating films obtained by using the aqueous urethane resin compositions were excellent in corrosion resistance, chemical resistance, and substrate adhesiveness.

On the other hand, regarding Comparative Examples 1 to 4, which are examples in which organic solvents having a Hansen solubility parameter falling outside the range defined in the present invention were used as the organic solvent, it was able to be confirmed that the aqueous urethane resin compositions in Comparative Examples 1 to 3 were insufficient in the composition stability and film formability, and the coating films obtained by using the aqueous urethane resin compositions were significantly poor in the corrosion resistance, chemical resistance, and substrate adhesiveness.

Comparative Example 4 was an example in which N-methylpyrrolidone was used as the organic solvent. The coating film obtained by using the aqueous urethane resin composition of Comparative Example 4 was superior in the corrosion resistance, chemical resistance, and substrate adhesiveness, but because of its toxicity, N-methylpyrrolidone is low in environmental adaptability. Accordingly, it was able to be confirmed that the aqueous urethane resin composition in Comparative Example 4 was insufficient from the viewpoint of achieving both the film formability of coating film and the environmental adaptability.

## Claims

1. An aqueous urethane resin composition comprising (A) a urethane resin, (B) an organic solvent having a boiling point in the range of 150 to 350°C, and (C) an aqueous medium,
wherein the urethane resin (A) has a glass transition temperature (Tg) in the range of 40 to 150°C, and the organic solvent (B) has a Hansen solubility parameter, determined as indicated in the description, in which a dispersion member (δd) is 16 MPa ^{0.5} or more and less than 19 Mpa^{0.5}, a polar member (δp) is 5 MPa^{0.5} or more and less than 11.5 MPa^{0.5}, and a hydrogen-bonding member (δh) is 4 MPa^{0.5} or more and less than 10 MPa^{0.5}, wherein
the organic solvent (B) is selected from the group consisting of isophorone (δd: 17, δp: 8, δh: 5), diethylene glycol monoethyl ether acetate (δd: 16.2, δp: 5.1, δh: 9.3), propylene glycol diacetate (δd: 16.4, δp: 5.5, δh: 7.9), 1,4-butanediol diacetate (δd: 16.4, δp: 5.5, δh: 7.4), 1,3-butyleneglycol diacetate (δd: 16.4, δp: 5.2, δh: 7.4), tripropylene glycol methyl ether (δd: 16, δp: 6.3, δh: 8.6), N,N-dimethyl-β-methoxypropionamide (δd: 17.2, δp: 11, δh: 9.5), and N,N-dimethyl-β-butoxypropionamide (δd: 16.9, δp: 8.9, δh: 6.7).

2. The aqueous urethane resin composition according to claim 1, wherein the urethane resin (A) contains aromatic rings and cyclohexyl rings in the range of 1 to 6 mol/kg in total.

3. The aqueous urethane resin composition according to claim 1, wherein the urethane resin (A) is a urethane resin produced by allowing a polyol (a1) to react with a polyisocyanate (a2), the polyol (a1) containing (a1-1) one or more polyols selected from the group consisting of a polyether polyol, a polyester polyol, and a polycarbonate polyol, (a1-2) a polyol having a hydrophilic group, and (a1-3) a low-molecular polyol having an aromatic ring and/or an aliphatic ring and having a number average molecular weight of 100 to 800.

4. The aqueous urethane resin composition according to claim 1, wherein the content of the organic solvent (B) in the aqueous urethane resin composition is in the range of 0.1 to 50% by mass.

5. The aqueous urethane resin composition according to claim 1, wherein the mass ratio of the organic solvent (B) to the aqueous medium (C), "organic solvent (B)/aqueous medium (C)", is in the range of 0.001 to 5.

6. An article comprising a coating film of the aqueous urethane resin composition as set forth in any one of claims 1 to 5.

## Patentansprüche

1. Wässrige Urethanharzzusammensetzung, umfassend (A) ein Urethanharz, (B) ein organisches Lösungsmittel mit einem Siedepunkt im Bereich von 150 bis 350°C und (C) ein wässriges Medium,
wobei das Urethanharz (A) eine Glasübergangstemperatur (Tg) im Bereich von 40 bis 150°C aufweist und das organische Lösungsmittel (B) einen Hansen-Löslichkeitsparameter, bestimmt wie in der Beschreibung angegeben, aufweist, wobei ein Dispersionselement (δd) 16 MPa^{0,5} oder mehr und weniger als 19 MPa^{0,5} beträgt, ein polares Element (δp) 5 MPa ^{0,5} oder mehr und weniger als 11,5 MPa^{0,5} beträgt, und ein Wasserstoffbrückenbindungselement (δh) 4 MPa^{0,5} oder mehr und weniger als 10 MPa^{0,5} beträgt, wobei
das organische Lösungsmittel (B) aus der Gruppe ausgewählt ist, die aus Isophoron (δd: 17, δp: 8, δh: 5), Diethylenglykolmonoethyletheracetat (δd: 16,2, δp: 5,1, δh: 9,3), Propylenglykoldiacetat (δd: 16,4, δp: 5,5, δh: 7,9), 1,4-Butandioldiacetat (δd: 16,4, δp: 5,5, δh: 7,4), 1,3-Butylenglykoldiacetat (δd: 16,4, δp: 5,2, δh: 7,4), Tripropylenglykolmethylether (δd: 16, δp: 6,3, δh: 8,6), N,N-Dimethyl-β-methoxypropionamid (δd: 17,2, δp: 11, δh: 9,5) und N,N-Dimethyl-β-butoxypropionamid (δd: 16,9, δp: 8,9, δh: 6,7).

2. Wässrige Urethanharzzusammensetzung nach Anspruch 1, wobei das Urethanharz (A) aromatische Ringe und Cyclohexylringe im Bereich von insgesamt 1 bis 6 mol/kg enthält.

3. Wässrige Urethanharzzusammensetzung nach Anspruch 1, wobei das Urethanharz (A) ein Urethanharz ist, das hergestellt wird, indem ein Polyol (a1) mit einem Polyisocyanat (a2) umgesetzt wird, wobei das Polyol (a1) (a1-1) ein oder mehrere Polyole, ausgewählt aus der Gruppe bestehend aus einem Polyetherpolyol, einem Polyesterpolyol, und einem Polycarbonatpolyol, (a1-2) ein Polyol mit einer hydrophilen Gruppe und (a1-3) ein niedermolekulares Polyol mit einem aromatischen Ring und/oder einem aliphatischen Ring und einem zahlenmittleren Molekulargewicht von 100 bis 800 enthält.

4. Wässrige Urethanharzzusammensetzung nach Anspruch 1, wobei der Gehalt des organischen Lösungsmittels (B) in der wässrigen Urethanharzzusammensetzung im Bereich von 0,1 bis 50 Massen-% liegt.

5. Wässrige Urethanharzzusammensetzung nach Anspruch 1, wobei das Massenverhältnis des organischen Lösungsmittels (B) zum wässrigen Medium (C), "organisches Lösungsmittel (B)/wässriges Medium (C)", im Bereich von 0,001 bis 5 liegt.

6. Gegenstand, der einen Beschichtungsfilm aus der wässrigen Urethanharzzusammensetzung nach einem der Ansprüche 1 bis 5 umfasst.

## Revendications

1. Composition aqueuse de résine d'uréthane comprenant (A) une résine d'uréthane, (B) un solvant organique ayant un point d'ébullition dans la plage de 150 à 350 °C, et (C) un milieu aqueux,
dans laquelle la résine d'uréthane (A) a une température de transition vitreuse (Tg) dans la plage de 40 à 150 °C, et le solvant organique (B) a un paramètre de solubilité de Hansen, déterminé comme indiqué dans la description, dans lequel un élément de dispersion (δd) est de 16 MPa^{0,5} ou plus et moins de 19 MPa^{0,5}, un élément polaire (δp) est de 5 MPa^{0,5} ou plus et moins de 11,5 MPa^{0,5}, et un élément de liaison hydrogène (δH) est de 4 MPa^{0,5} ou plus et moins de 10 MPa^{0,5}, dans laquelle
le solvant organique (B) est choisi dans le groupe constitué par l'isophorone (δd : 17, δp : 8, δh : 5), l'acétate de monoéthyl éther de diéthylène glycol (δd : 16,2, δp : 5,1, δh : 9,3), le diacétate de propylène glycol (δd : 16,4, δp : 5,5, δh : 7,9), le diacétate de 1,4-butanediol (δd : 16,4, δp : 5,5, δh : 7,4), le diacétate de 1,3-butylèneglycol (δd : 16,4, δp : 5,2, δh : 7,4), le tripropylèneglycol méthyléther (δd : 16, δp : 6,3, δh : 8,6), le N,N-diméthyl-β-méthoxypropionamide (δd : 17,2, δp : 11, δh : 9,5), et le N,N-diméthyl-β-butoxypropionamide (δd : 16,9, δp : 8,9, δh : 6,7).

2. Composition aqueuse de résine d'uréthane selon la revendication 1, dans laquelle la résine d'uréthane (A) contient des cycles aromatiques et des cycles cyclohexyle dans la plage de 1 à 6 moles/kg au total.

3. Composition aqueuse de résine d'uréthane selon la revendication 1, dans laquelle la résine d'uréthane (A) est une résine d'uréthane produite en laissant un polyol (a1) réagir avec un polyisocyanate (a2), le polyol (a1) contenant (a1-1) un ou plusieurs polyols choisis dans le groupe constitué d'un polyéther polyol, d'un polyester polyol et d'un polycarbonate polyol, (a1-2) un polyol ayant un groupe hydrophile, et (a1-3) un polyol de bas poids moléculaire ayant un cycle aromatique et/ou un cycle aliphatique et ayant un poids moléculaire moyen en nombre de 100 à 800.

4. Composition aqueuse de résine d'uréthane selon la revendication 1, dans laquelle la teneur en solvant organique (B) dans la composition aqueuse de résine d'uréthane est dans la plage de 0,1 à 50 % en masse.

5. Composition aqueuse de résine d'uréthane selon la revendication 1, dans laquelle le rapport massique du solvant organique (B) sur le milieu aqueux (C), "solvant organique (B)/milieu aqueux (C)", est dans la plage de 0,001 à 5.

6. Article comprenant un film de revêtement de la composition aqueuse de résine d'uréthane selon l'une quelconque des revendications 1 à 5.
